# EUROPEAN PATENT APPLICATION

(11) **EP 3 432 032 A1**
(43) Date of publication of application: **23.01.2019**
(21) Application number: 18184531.4
(22) Date of filing: 19.07.2018
(51) Int. Cl.: G01S 17/66, G01S 17/93

(54) **AUTOMATED VEHICLE LIDAR TRACKING SYSTEM FOR OCCLUDED OBJECTS**

(30) Priority: 19.07.2017 US 201715653866
(71) Applicant: Aptiv Technologies Limited, St. Michael (BB)
(72) Inventor: YANG, Yifan, Pittsburgh, Pennsylvania 15217 (US); WANG, Yimu, Pittsburgh, Pennsylvania 15217 (US); OZBILGIN, Guchan, Pittsburgh, Pennsylvania 15206 (US); XU, Wenda, Pittsburgh, Pennsylvania 15217 (US)
(74) Representative: Conroy, John

(57) **Abstract**

A tracking system (22) for at least partial automated operation of a host vehicle (20) is configured to detect and monitor a moving object (28) that may be at least momentarily, and at least partially, obstructed by an obstruction (36). The tracking system (22) includes an object device (68) and a controller (74). The object device (68) is configured to detect the object (28) with respect to the obstruction (36) by monitoring for object (28) and the obstruction (36) at a prescribed frequency, and output a plurality of object signals (90) at the prescribed frequency. The controller (74) is configured to receive and process the plurality of object signals (90) to recognize the object (28), determine a reference point (58) of the object (28), and utilize the reference point (58) to determine a true speed of the object (28) as the object (28) is increasingly or decreasingly obstructed by the obstruction (36).

## Description

### CROSS-REFERENCE TO RELATED APPLICATIONS

This application claims priority and benefit to U.S. Application Serial No. 15/653,866, filed on July 19, 2017.

### BACKGROUND OF THE INVENTION

The present disclosure relates to automated vehicles, and more particularly, to Light Detection and Ranging (LiDAR) tracking systems of the automated vehicles.

The operation of modern vehicles is becoming increasingly autonomous, causing a decrease in driver intervention. A control feature of such a modern vehicle may cause the vehicle to recognize a moving object (e.g., another vehicle) and react accordingly. The recognition of such moving objects may include a dimensional determination, speed, travel direction, and distance at any given moment in time. Unfortunately, in some applications, the moving object may, at least momentarily, move behind an obstructing object, thereby interrupting the recognition of the moving object and potentially delaying reaction or causing the modern vehicle to conservatively react.

### SUMMARY OF THE INVENTION

In one, non-limiting, exemplary embodiment, a tracking system for at least partial automated operation of a host vehicle is configured to detect and monitor a moving object that may be at least momentarily, and at least partially, obstructed by an obstruction. The tracking system includes an object device and a controller. The object device is configured to detect the object with respect to the obstruction by monitoring for object and the obstruction at a prescribed frequency, and output a plurality of object signals at the prescribed frequency. The controller is configured to receive and process the plurality of object signals to recognize the object, determine a reference point of the object, and utilize the reference point to determine a true speed of the object as the object is increasingly or decreasingly obstructed by the obstruction.

In another, non-limiting, embodiment, an automated vehicle includes a controller and a tracking system. The controller includes a processor and an electronic storage medium. The tracking system includes a LiDAR device configured to detect a moving object and send a plurality of object signals to the controller. An application is stored in the electronic storage medium and executed by the processor to determine a reference point of the moving object based at least in-part on the plurality of object signals. The application utilizes the reference point to determine a true speed of the moving object as the moving object is at least momentarily increasingly or decreasingly obstructed by an obstruction.

In another, non-limiting, embodiment, a computer software product is executed by a controller of a host vehicle, and is configured to receive an object signal associated with a moving object and receive a positioning signal associated with the host vehicle to effect an automated reaction of the host vehicle based on at least a true speed of the moving object. The true speed of the moving object is determined as the moving object is increasingly or decreasingly obstructed by an obstruction. The computer software product includes an object recognition module and a determination module. The object recognition module is configured to receive the object signal to recognize the moving object. The determination module is configured to assign a fixed reference point upon the moving object once recognized to determine the true speed of the moving object.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a top view of intersecting roadways traveled by an automated vehicle with a LiDAR tracking system, and a moving object both in first positions with respect to an obstructing object.
FIG. 2 is the top view of the intersecting roadways with the automated vehicle and the moving object in second positions;
FIG. 3 is the top view of the intersecting roadways with the automated vehicle and the moving object in third positions; and
FIG. 4 is a schematic of the automated vehicle with the LiDAR tracking system.

### DETAILED DESCRIPTION

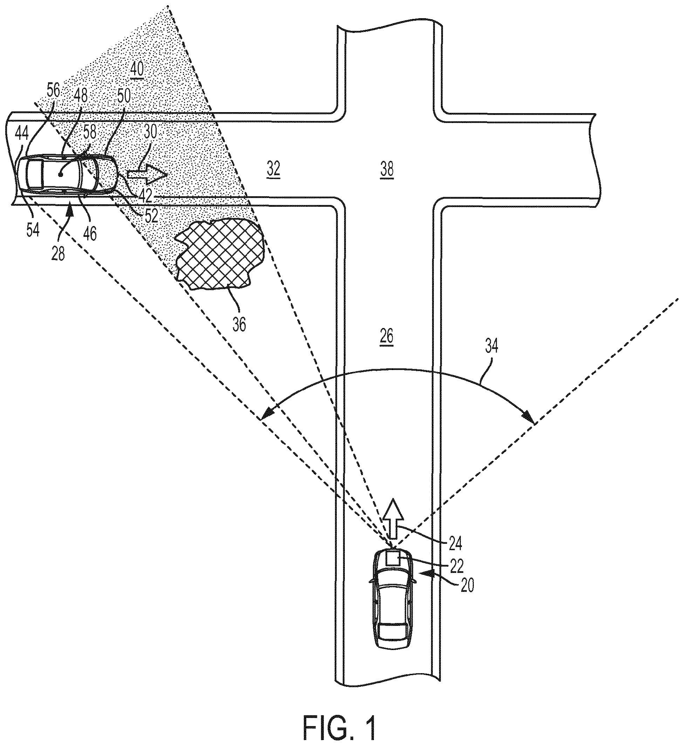

FIG. 1 illustrates a non-limiting example of a semi-autonomous or autonomous vehicle 20 (hereafter termed automated or host vehicle) that includes a tracking system 22, which may be a Light Detection and Ranging (LiDAR) tracking system. In the, non-limiting, present example, the host vehicle 20 is traveling (see arrow 24) upon a first roadway 26. A moving object 28, which may be another vehicle, is traveling (see arrow 30) upon a second roadway 32 that may intersect the first roadway 26. The tracking system 22 may include a field or range of view (see arrow 34) that may range about the entire host vehicle 20 (i.e., three-hundred and sixty degrees, 360 degrees), or some range sufficient to view forward locking scenes with respect to the direction 24 of motion. In the present example, an obstruction 36 is located near an intersection 38 of the two roadways 26, 32. The obstruction 36 may be stationary, such as a protruding land mass or man-made structure, or may be moving, and is large enough to obstruct (see shaded area 40) the tracking system 22 from generally detecting anything behind the obstruction. In some moments in time, the obstruction 36 may partially and/or entirely, obstruct the detection of the moving object 28 by the LiDAR tracking system 22 of the host vehicle 20.

In the example of the moving object 28 being a vehicle, the vehicle 28 may include a front face 42, a rear face 44, a passenger side 46, and an operator side 48 all spanning between respective vehicle corners 50, 52, 54, 56. For tracking purposes, the vehicle 28 may further include a reference point 58 that may be a center point. In the illustrated example, the center point 58 is generally the center of a 'footprint' of the vehicle 28. In another example, the center point 58 may be the center of one of the sides 46, 48 being, at least in-part, viewed by the tracking system 22.

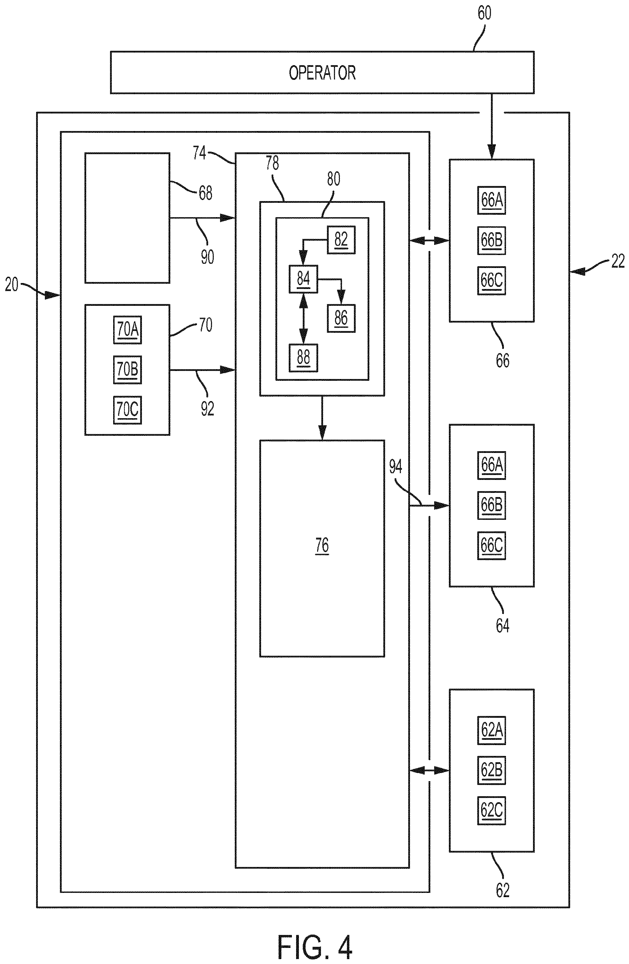

In at least the example of the tracking system 22 being a LiDAR tracking system, the system 22 is adapted to generally recognize the shape and size of at least a portion of the object or vehicle 28 within the unobstructed view of the tracking system 22. As is generally known in the art of LiDAR tracking systems, the system 22 is further configured to recognize the direction of motion 30 and speed of the moving object 28. Once the moving object 28 is recognized, the tracking system 22 is configured to timely initiate and/or coordinate an appropriate response, or reaction, by the host vehicle 20. That is, in the example of an autonomous vehicle 20 (i.e., fully automated), the tracking system may control (or effect the control of) the speed, steering, brakes, and other aspects of the host vehicle operation generally needed for the host vehicle 20 to travel upon the roadway 26 without interaction from an occupant, or operator 60 (see FIG. 4) situated within the host vehicle 20.

Referring to FIGS. 1 and 4, and in another application of the tracking system 22, the host vehicle 20 may be driven by the operator 60. In this case, the system 22 may provide assistance to the operator 60. This assistance may be the mere activation of a warning-device 62 (see FIG. 4), or may include activating a control override unit 64 that temporarily take over the control of manual controls 66 that are typically used by the operator 60. Such manual controls 66 may include a directional unit 66A (e.g., steering unit), an acceleration unit 66B, and a braking unit 66C of the host vehicle 20. The warning device 62 may include, or may be, an audible device 62A, a visual device 62B, and/or a haptic device 62C.

Referring to FIG. 4, the tracking system 22 may include the warning device 62, the control override unit 64, the manual controls 66, an object device or sensor 68, a positioning device 70, and a controller 74. The controller 74 may include a processor 76 and an electronic storage medium 78. The processor 76 may be a microprocessor or other control circuitry such as analog and/or digital control circuitry including an application specific integrated circuit (ASIC) for processing data as is known by one with skill in the art. The storage medium 78 of the controller 74 may be non-volatile memory, such as electrically erasable programmable read-only memory (EEPROM) for storing one or more routines, thresholds, and captured data, hereafter referred to as an application 80 (e.g., a computer software product). The application 80 may be executed by the processor 76 of the controller 74 to at least recognize the moving object 28, determine the center point 58 of the moving object 28, detect the obstruction 36 with respect to the moving object 28, and generally cause an appropriate reaction of the host vehicle 20.

The object device 68 of the system 22 may be at least one LiDAR device as is generally known to one having skill in the art, and is configured to detect and monitor the moving object 28 and the obstruction 36. More specifically, the LiDAR device 68 may include a large array of individual light or laser beams that are pulsed at a predetermined frequency. Sensor(s) included as part of the LiDAR device 38 are configured to detect the reflected, or returned, light. The time between the initial pulsing of the light and the sensed light return is used to calculate the distance of the reflecting object surface. The rapid pulsing of the device 38 and the information obtained can be processed to determine movement of the detected object 28 and/or obstruction 36.

The object device 68 may be mounted toward the front of the host vehicle 20. Alternatively, the object device 68 may be a plurality of LiDAR devices with each device mounted proximate to a respective corner 50, 52, 54, 56 of the host vehicle 20. In yet another example, the LiDAR device 68 may include the capability of rotating at a known frequency to capture a three-hundred and sixty degree scene. The application 80 may include an integration module 82, an object recognition module 84, a center point determination module 86, and an object data base 88.

In at least the example of multiple LiDAR devices 68, the integration module 82 may be configured to integrate multiple signals 90 received from the multiple LiDAR devices 68. The object recognition module 84 may be configured to generally receive a processed signal of multiple signals 90, from the integration module 82 if multiple LiDAR devices 68 are utilized. In the example of a single LiDAR device 68, the object recognition module 84 may receive the signal 90 directly from the LiDAR device 68.

The positioning device 70 of the tracking system 22 may be configured to determine a relative position, speed, and direction of the host vehicle 20. This positioning data may be sent to the application 80, executed by the controller 74, as a signal 92 and is generally coordinated with the signal or data 90 sent from the object device 68 in order for the application 80 to determine a desired host vehicle reaction. The positioning device 70 may be, or may include, a motion sensor 70A, a geographic navigation device 70B (e.g., global positioning system (GPS)), a speed sensor 70C, and/or other devices configured to determine the position, speed, and direction of movement of the host vehicle 20. The positioning device 70 may be mounted at the front of the host vehicle 20, but other locations such as on the roof of the host vehicle 20, or within the occupant compartment and looking through the windshield of the host vehicle 20 are also contemplated.

During operation of more typical automated vehicles, traditional LiDAR tracking systems may sense a moving object, and from what is clearly viewable, may determine a location of the moving object and a speed. In a scenario where the same traditional tracking system is sensing the moving object that begins to move behind an obstruction (i.e., an object that prevents the tracking system from sensing the entire moving object), the tracking system may incorrectly determine that the moving object is slowing down, or moving slower than it actually is, and may not be capable of recognizing the 'true' location of a forward portion of the moving object. Similarly, in a scenario where the moving object is emerging from behind an obstruction, the traditional tracking system may determine that the moving object is moving faster than it actually is.

Referring to FIGS. 1 and 4, and in operation of the present tracking system 22, the LiDAR device 68 may sense, for example, the entire passenger side 46 (i.e., from rear corner 54 to forward corner 52) of the moving object 28, and send an associated object signal 90 to the object recognition module 84 of the application 80 for processing by the processor 76 of the controller 74. In one embodiment, the recognition module 84 may simply determine the distance between corners 52, 54 of the moving object 28. Utilizing this fixed distance (i.e., true length of the moving object 28), the determination module 86 may determine a fixed reference point 58 upon the passenger side 46. The application 80 may determine a true speed of the moving object 28 via the reference point 58. In one example, this reference point 58 may be a center point.

As the moving object begins to move behind the obstruction 36, the reference point 58 remains fixed, and the application continues to determine object speed via the reference point, and not the entire portion of the moving object 28 that remains viewable (i.e., that portion not yet behind the obstruction 36). When the reference point 58 is behind the obstruction 36, the application 80 may utilize the last calculated speed of the moving object 28 stored in the electronic storage medium 78 of the controller 74. In an example, where the moving object is decelerating or accelerating, the application 80 may also use the last deceleration or acceleration rate of the moving object 28. Similarly, and in an application where the moving object 28 is turning or changing direction, the application may utilize the last recorded positioning vectors.

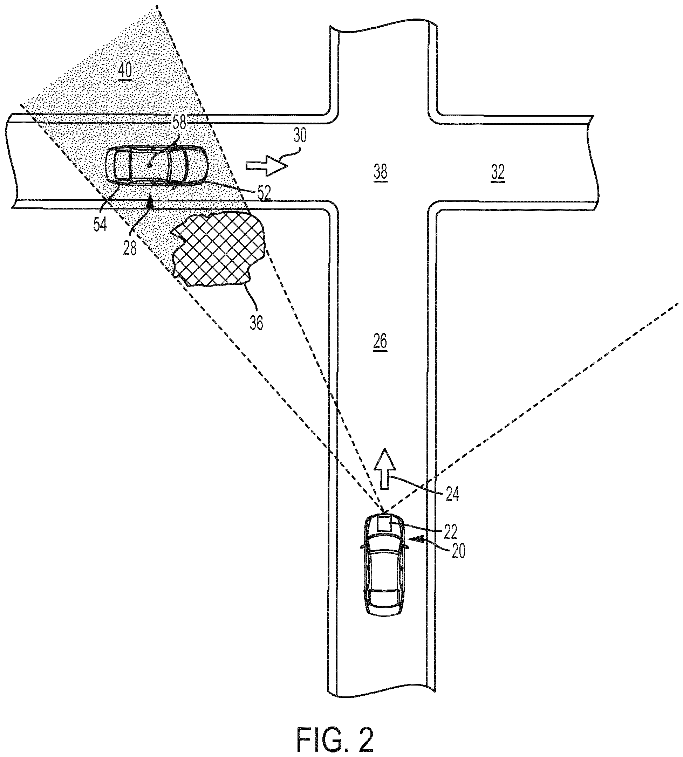

Referring to FIG. 2, and in one embodiment where the moving object 28 may be momentarily completely behind the obstruction 36, the application 80 may determine the presence of the object 28 based on the previously measured speed, rate of speed change, and direction; and, anticipate when and where the moving object may begin emerging from the obstruction. When the moving object 28 initially begins to emerge from behind the obstruction 36, the front corner 54 may first be sensed by the LiDAR device 68. Once sensed, the determination module 86 of the application 80 may re-confirm, or re-establish, the location of the reference point 58 based, at least in-part, on the pre-established distance between the front corner 54 and the reference point 58. Similarly, the true velocity may be determined by the application 80 once again and for the current moment in time.

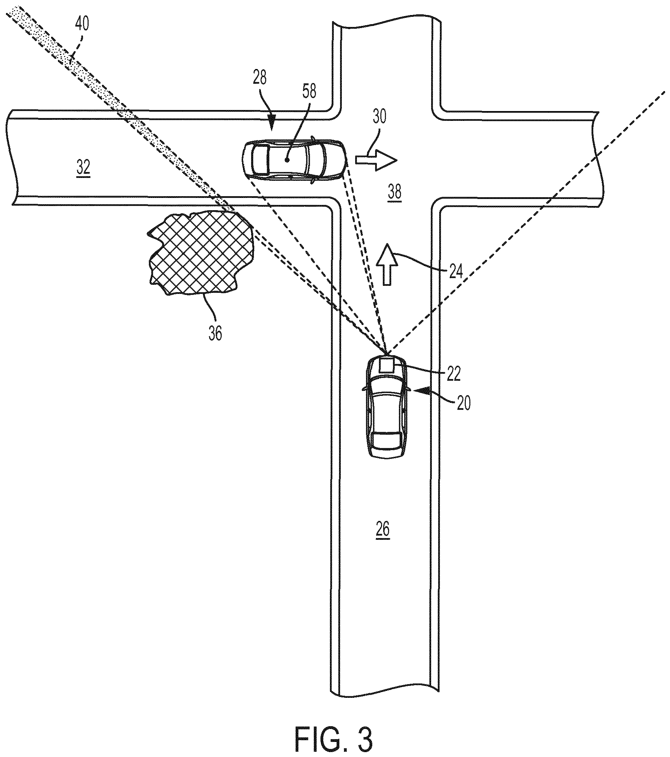

Referring to FIG. 3, the moving object 28 may continue to emerge from behind the obstruction until the entire object is viewable, or sensed, by the LiDAR device 68. At some moment in time prior to the emergence of the moving object 28 from behind the obstruction 36, the application 80, and the real-time processing of signals 90, 92, may cause the controller 74 to output a command signal 94 to the control override unit 64 for automated operation of at least one of the directional unit 66A, the acceleration unit 66B, and the braking unit 66C to effect an appropriate reaction by the host vehicle 20.

In another embodiment, recognition of the moving object 28 may be more, or different, than the measurement between forward and rearward corners 52, 54. That is, the signal 90 sent by the LiDAR device 68 may contain enough information for the recognition module 84 to determine what the object is by accessing prescribed data in the object data base 88. For example, LiDAR device 68 may only sense a portion of a side 46 of the moving object 28. However, this limited information may be used to search for, as one example, a vehicle type or model. Once the vehicle model is known, the length and/or width of the vehicle may also be accessed.

In another embodiment, the reference point 58 may be the center of a 'footprint' of the moving object 28. If the moving object 28 is a vehicle, and if the length and width of the vehicle is determined, as discussed above, the reference point 58 of the 'footprint' (i.e., center of an area) may also be determined.

Accordingly, the tracking system 22 for automated operation of the host vehicle 20 advances the automated vehicle arts by enabling a system, application, or controller to react more quickly, efficiently, and/or accurately to a moving object that may be at least partially blocked by an obstruction at any given moment in time. In addition, the present disclosure provides a tracking system capable of determining a true moving object speed and a true object location as the moving object moves behind, or emerges from, an obstruction.

The various functions described above may be implemented or supported by a computer program that is formed from computer readable program codes, and that is embodied in a computer readable medium. Computer readable program codes may include source codes, object codes, executable codes, and others. Computer readable mediums may be any type of media capable of being accessed by a computer, and may include Read Only Memory (ROM), Random Access Memory (RAM), a hard disk drive, a compact disc (CD), a digital video disc (DVD), or other forms.

Terms used herein such as component, application, module, system, and the like are intended to refer to a computer-related entity, either hardware, a combination of hardware and software, or software execution. By way of example, an application may be, but is not limited to, a process running on a processor, a processor, an object, an executable, a thread of execution, a program, and/or a computer. It is understood that an application running on a server and the server, may be a component. One or more applications may reside within a process and/or thread of execution and an application may be localized on one computer and/or distributed between two or more computers

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

### Embodiments

Although the present invention is defined in the attached claims, it should be understood that the present invention can also (alternatively) be defined in accordance with the following embodiments:
1. A tracking system (22) for semi-autonomous or autonomous operation of a host vehicle (20) is configured to detect and monitor a moving object (28) that may be at least momentarily and at least partially obstructed by an obstruction (36), the tracking system (22) comprising:
   an object device (68) configured to detect the moving object (28) with respect to the obstruction (36) by monitoring for the moving object (28) and the obstruction (30) at a prescribed frequency, and output a plurality of object signals (90) at the prescribed frequency; and
   a controller (74) configured to receive and process the plurality of object signals (90) to recognize the object (28), assign a fixed reference point (58) to the object (28), and utilize the reference point (58) to determine a true speed of the moving object (28) as the object (28) is increasingly or decreasingly obstructed by the obstruction (36).
2. The tracking system (22) set forth in embodiment 1, further comprising:
   a positioning device (70) configured to detect the positioning of the host vehicle (20), and output a plurality of positioning signals (92) to the controller (74) for processing correlation with the plurality of object signals (90) to determine a reaction by the host vehicle (20).
3. The tracking system (22) set forth in embodiment 2, wherein the positioning device (70) includes a global positioning system (70B).
4. The tracking system (22) set forth in embodiment 2, wherein the positioning device (70) includes a speed sensor (70C).
5. The tracking system (22) set forth in embodiment 1, wherein the object device (68) includes a LiDAR device.
6. The tracking system (22) set forth in embodiment 1, wherein the moving object (28) is a second vehicle.
7. The tracking system (22) set forth in embodiment 1, further comprising:
   an application (80) stored in an electronic storage medium (78) of the controller (74) and executed by a processor (76) of the controller (74), wherein the application (80) includes an object data base (88), an object recognition module (84), and a reference point determination module 86, and wherein the object recognition module (84) is configured to process the plurality of object signals (90) and utilize the object data base (88) to classify the moving object (28), and the reference point determination module (86) is configured to identify the reference point (58) of the classified vehicle to effect a determination of the true speed.
8. An automated vehicle (20) comprising:
   a controller (74) including a processor (76) and an electronic storage medium (78); and
   a tracking system (22) including a LiDAR device configured to detect a moving object (28) and send a plurality of object signals (90) to the controller (74), an application (80) stored in the electronic storage medium (78) and executed by the processor (76) to determine a reference point (58) of the moving object (28) based at least in-part on the plurality of object signals (90), and utilizing the reference point (58) to determine a true speed of the moving object (28) as the moving object (28) is at least momentarily increasingly or decreasingly obstructed by an obstruction (36).
9. The automated vehicle (20) set forth in embodiment 8, further comprising:
   vehicle controls (66) constructed and arranged to effect a vehicle reaction based at least in-part on the true speed.
10. The automated vehicle (20) set forth in embodiment 9, wherein the vehicle controls (66) include at least one of a directional unit (66A), an acceleration unit (66B), and a braking unit (66C).
11. The automated vehicle (20) set forth in embodiment 8, wherein the tracking system (22) includes an application (80) stored in an electronic storage medium (78) of the controller (74) and executed by a processor (76) of the controller (74), wherein the application (80) includes an object data base (88), an object recognition module (84), and a reference point determination module (86), and wherein the object recognition module (84) is configured to process the plurality of object signals (90) and utilize the object data base (88) to classify the moving object (28), and the reference point determination module (86) is configured to identify the reference point (58) of the classified moving object (28) to effect a determination of the true speed.
12. A computer software product (80) executed by a controller (74) of a host vehicle (20)
   configured to receive an object signal (90) associated with a moving object (28) and receive a positioning signal (92) associated with the host vehicle (20) to effect an automated reaction of the host vehicle (20) based on at least a true speed of the moving object (28) determined as the moving object (28) is increasingly or decreasingly obstructed by an obstruction (36), the computer software product (80) comprising:
   an object recognition module (84) configured to receive the object signal (90) to recognize the moving object (28);
   a determination module (86) configured to assign a fixed reference point (58) upon the moving object (28) once recognized to determine the true speed of the moving object (28).
13. The computer software product (80) set forth in embodiment 12 further comprising:
   an object data base (88) including preprogrammed information to assist the object recognition module (84) in recognizing the moving object (28).
14. The computer software product (80) set forth in embodiment 13, wherein the determination module (86) correlates the object signal (90) and the positioning signal (92) to determine the true speed.
15. The computer software product (80) set forth in embodiment 14, wherein the object signal (90) is associated with a side of the moving object (28) spanning between forward and rearward corners (52, 54) of the moving object (28).
16. The computer software product (80) set forth in embodiment 15, wherein the fixed reference point (58) is a center point substantially centered between the forward and rearward corners (52, 54).
17. A tracking system for a vehicle, the tracking system comprising:
   an object device configured to detect and monitor a moving object and an obstruction and output object signals;
   a controller-circuit configured to:
      receive and process the object signals;
      determine a fixed reference point of the moving object based at least in part on the object signals; and
      utilize the fixed reference point to determine a speed of the moving object as the moving object is increasingly or decreasingly obstructed by the obstruction; and
   a positioning device configured to detect a position of the vehicle and output positioning signals to the controller-circuit,
   wherein processing of the object signals and the positioning signals causes the controller-circuit to effect a reaction by the vehicle, including outputting a command signal to a control override unit for automated operation of one or more of a steering unit, an acceleration unit, or a braking unit.
18. The tracking system of embodiment 17, wherein the object device is configured to:
   detect and monitor the moving object and the obstruction at a prescribed frequency; and
   output the object signals at a prescribed frequency.
19. The tracking system of embodiment 17, wherein the object device is configured to detect and monitor the moving object with respect to the obstruction.
20. The tracking system of embodiment 17, wherein the positioning device comprises one or more of a global positioning system, a speed sensor, or a motion sensor.
21. The tracking system of embodiment 17, wherein the moving object is a second vehicle.
22. The tracking system of embodiment 21, wherein the fixed reference point of the second vehicle is identified as a center point between a forward corner and a rear corner of the second vehicle.
23. The tracking system of embodiment 17, wherein the controller-circuit continues to determine the speed of the moving object via the fixed reference point as the moving object begins to move behind the obstruction and while the fixed reference point remains viewable.
24. The tracking system of embodiment 17, wherein the controller-circuit utilizes one or more of the last calculated speed of the moving object, the last acceleration rate of the moving object, or the last recorded positioning vector of the moving object when the fixed reference point is behind the obstruction.
25. The tracking system of embodiment 17, wherein the controller-circuit is configured to re-confirm or re-establish the fixed reference point when the moving object begins to emerge from being completely behind the obstruction.
26. The tracking system of embodiment 17, wherein the object device comprises a LiDAR device.
27. The tracking system of embodiment 17, comprising an application stored in an electronic storage medium of the controller-circuit and executed by a processor of the controller-circuit, wherein the application is configured to process the object signals and utilize an object database to classify the moving object.
28. The tracking system of embodiment 27, wherein the application is configured to determine a vehicle type and model of the moving object.
29. An automated vehicle comprising:
   an object device configured to detect and monitor a moving object and an obstruction and output object signals; and
   a controller-circuit configured to:
      receive and process the object signals;
      determine a fixed reference point of the moving object based at least in part on the object signals; and
      utilize the fixed reference point to determine a speed of the moving object as the moving object is increasingly or decreasingly obstructed by the obstruction.
30. The automated vehicle of embodiment 29, wherein the controller-circuit is configured to:
   receive a positioning signal associated with the vehicle; and
   use the object signals and the positioning signal to effect an automated reaction of the vehicle based on at least the determined speed of the moving object.
31. The automated vehicle of embodiment 29, wherein the fixed reference point is identified as a center point between a forward corner and a rear corner of the moving object.
32. The automated vehicle of embodiment 29, wherein the controller-circuit continues to determine the speed of the moving object via the fixed reference point as the moving object begins to move behind the obstruction and while the fixed reference point remains viewable.
33. A computer software product executed by a controller-circuit of a vehicle to cause the vehicle to perform operations comprising:
   receiving an object signal associated with a moving object;
   recognizing the moving object;
   assigning a fixed reference point upon the moving object;
   utilizing the fixed reference point to determine a speed of the moving object as the moving object is increasingly or decreasingly obstructed by an obstruction;
   receiving a positioning signal associated with the vehicle; and
   using the object signal and the positioning signal to effect an automated reaction of the vehicle based on at least the determined speed of the moving object.
34. The computer software product of embodiment 33, wherein the fixed reference point is identified as a center point between a forward corner and a rear corner of the moving object.
35. The computer software product of embodiment 33, the operations comprising continuing to determine the speed of the moving object via the fixed reference point as the moving object begins to move behind the obstruction and while the fixed reference point remains viewable.
36. The computer software product of embodiment 33, the operations comprising reconfirming or re-establishing the fixed reference point when the moving object begins to emerge from being completely behind the obstruction.

## Claims

1. A tracking system (22) for semi-autonomous or autonomous operation of a host vehicle (20) is configured to detect and monitor a moving object (28) that may be at least momentarily and at least partially obstructed by an obstruction (36), the tracking system (22) comprising:
an object device (68) configured to detect the moving object (28) with respect to the obstruction (36) by monitoring for the moving object (28) and the obstruction (30) at a prescribed frequency, and output a plurality of object signals (90) at the prescribed frequency; and
a controller (74) configured to receive and process the plurality of object signals (90) to recognize the object (28), assign a fixed reference point (58) to the object (28), and utilize the reference point (58) to determine a true speed of the moving object (28) as the object (28) is increasingly or decreasingly obstructed by the obstruction (36).

2. The tracking system (22) set forth in claim 1, further comprising:
a positioning device (70) configured to detect the positioning of the host vehicle (20), and output a plurality of positioning signals (92) to the controller (74) for processing correlation with the plurality of object signals (90) to determine a reaction by the host vehicle (20).

3. The tracking system (22) set forth in claim 2, wherein the positioning device (70) includes either a global positioning system (70B) or a speed sensor (70C).

4. The tracking system (22) set forth in claim 1, wherein the object device (68) includes a LiDAR device.

5. The tracking system (22) set forth in claim 1, wherein the moving object (28) is a second vehicle.

6. The tracking system (22) set forth in claim 1, further comprising:
an application (80) stored in an electronic storage medium (78) of the controller (74) and executed by a processor (76) of the controller (74), wherein the application (80) includes an object data base (88), an object recognition module (84), and a reference point determination module 86, and wherein the object recognition module (84) is configured to process the plurality of object signals (90) and utilize the object data base (88) to classify the moving object (28), and the reference point determination module (86) is configured to identify the reference point (58) of the classified vehicle to effect a determination of the true speed.

7. An automated vehicle (20) comprising tracking system (22) of claim 1, wherein:
the controller (74) includes a processor (76) and an electronic storage medium (78); and
the tracking system (22)includes a LiDAR device configured to detect a moving object (28) and send a plurality of object signals (90) to the controller (74), an application (80) stored in the electronic storage medium (78) and executed by the processor (76) to determine a reference point (58) of the moving object (28) based at least in-part on the plurality of object signals (90), and utilizing the reference point (58) to determine a true speed of the moving object (28) as the moving object (28) is at least momentarily increasingly or decreasingly obstructed by an obstruction (36).

8. The automated vehicle (20) set forth in claim 7, further comprising:
vehicle controls (66) constructed and arranged to effect a vehicle reaction based at least in-part on the true speed.

9. The automated vehicle (20) set forth in claim 8, wherein the vehicle controls (66) include at least one of a directional unit (66A), an acceleration unit (66B), and a braking unit (66C).

10. The automated vehicle (20) set forth in claim 7, wherein the tracking system (22) includes an application (80) stored in an electronic storage medium (78) of the controller (74) and executed by a processor (76) of the controller (74), wherein the application (80) includes an object data base (88), an object recognition module (84), and a reference point determination module (86), and wherein the object recognition module (84) is configured to process the plurality of object signals (90) and utilize the object data base (88) to classify the moving object (28), and the reference point determination module (86) is configured to identify the reference point (58) of the classified moving object (28) to effect a determination of the true speed.

11. The tracking system of claim 1, comprising a computer software product (80) executed by the controller (74) of the host vehicle (20) and configured to receive a first object signal (90) associated with a first moving object (28) and receive a positioning signal (92) associated with the host vehicle (20) to effect an automated reaction of the host vehicle (20) based on at least a true speed of the first moving object (28) determined as the first moving object (28) is increasingly or decreasingly obstructed by an obstruction (36), the computer software product (80) comprising:
an object recognition module (84) configured to receive the first object signal (90) to recognize the first moving object (28);
a determination module (86) configured to assign a fixed reference point (58) upon the first moving object (28) once recognized to determine the true speed of the first moving object (28).

12. The computer software product (80) set forth in claim 11, further comprising:
an object data base (88) including preprogrammed information to assist the object recognition module (84) in recognizing the first moving object (28).

13. The computer software product (80) set forth in claim 12, wherein the determination module (86) correlates the first object signal (90) and the positioning signal (92) to determine the true speed.

14. The computer software product (80) set forth in claim 13, wherein the first object signal (90) is associated with a side of the first moving object (28) spanning between forward and rearward corners (52, 54) of the first moving object (28).

15. The computer software product (80) set forth in claim 14, wherein the fixed reference point (58) is a center point substantially centered between the forward and rearward corners (52, 54).
